# FASCICULE DE BREVET EUROPEEN

(11) **EP 4 421 145 B1**
(45) Date de publication et mention de la délivrance du brevet: **17.12.2025**
(21) Numéro de dépôt: 23158362.6
(22) Date de dépôt: 23.02.2023
(51) Int. Cl.: C09K 3/18

(54) **GRANULAT POUR LE TRAITEMENT DE SURFACES ENNEIGÉES ET/OU VERGLACÉES**
GRANULAT ZUR BEHANDLUNG VON SCHNEE- UND/ODER EISBEDECKTEN OBERFLÄCHEN
GRANULATE FOR THE TREATMENT OF SNOWY AND/OR ICE-COVERED SURFACES

(43) Date de publication de la demande: 28.08.2024
(73) Titulaire: Ville de la Chaux-de-Fonds, 2300 La Chaux-de-Fonds (CH)
(72) Inventeur: Mucaria, Joseph, 2300 La Chaux-de-Fonds (CH)
(74) Mandataire: Stolmár & Partner Patentanwälte PartG mbB

(56) Documents cités:
- EP-A1- 1 958 998
- CA-C- 2 655 900

## Description

La présente invention a pour objet un nouveau granulat en bois pour le traitement de surfaces enneigées et/ou verglacées dans le cadre de l'entretien hivernal ainsi qu'un procédé pour la préparation d'un tel granulat.

L'entretien du réseau routier en périodes hivernales exige une attention toute particulière. L'ensemble de méthodes et moyens d'opération connus vise à maintenir ou à rétablir la circulation sécuritaire des personnes et des marchandises sur l'ensemble du réseau routier durant l'hiver et est désigné plus généralement par l'expression « viabilité hivernale ».

Les exigences de déneigement et de déglaçage définissent la qualité d'entretien du réseau. Les matériaux utilisés pour l'entretien hivernal des routes dans l'art antérieur sont principalement les agents fondants (le chlorure de sodium et autres sels) et les abrasifs (gravillons, sable). Les fondants ont pour objectif de faire disparaître la neige ou la glace en la transformant en eau. L'action fondante étant influencée par la température, la température de la chaussée détermine le type d'agent fondant à utiliser. A des températures inférieures à -15°C, la plupart des agents fondants se révèlent inefficaces et on utilise à ces basses températures l'abrasif sur tous les types de routes.

Il faut noter que l'action fondante est favorisée par le passage des véhicules. La chaleur et l'humidité engendrées par la friction des pneus sur la chaussée amorcent la fonte du sel et stimulent son action sur la glace. En somme, plus le débit de circulation est important, plus l'action du sel permet l'atteinte des exigences de déglaçage rapide.

Comme décrit ci-dessus, on utilise dans l'art antérieur deux matériaux principaux pour l'entretien hivernal des routes, notamment le chlorure de sodium (sel) et les abrasifs. L'abrasif est un sable tamisé ou un granulat concassé mélangé avec 5% de chlorure de sodium qui empêche le sable de geler en bloc et d'être peu maniable. L'abrasif est utilisé pour améliorer l'adhérence des pneus et ce, surtout dans les virages et aux endroits dangereux (intersections, traverse de voies ferrées).

CA 2 655 900 C décrit des granulés pour le traitement de surfaces enneigées et/ou glacées constitués de particules de bois comprenant 1 à 10 % en poids d'au moins un sel hydrosoluble d'un métal alcalin ou alcalino-terreux, le sel soluble étant un chlorure, un nitrate, un sulfate ou un acétate d'un métal alcalin ou alcalino-terreux.

L'action fondante est également influencée par la température. Cependant, une faible quantité de sel ou de chlorure de calcium est ajoutée à l'abrasif afin de lui permettre de se fixer sur le fond de neige durci et/ou sur la glace. Cependant, en dehors de périodes de froid extrêmes, même cette stratégie offre peu de résultats. De l'eau et de la chaleur sont nécessaires pour la dissolution du sel et pour lui conférer sa pleine capacité.

D'autres produits, tel que le chlorure de calcium en flocon ou sous forme liquide ainsi que le calso, sont aussi utilisés pour augmenter l'efficacité des deux matériaux principaux.

Le calso est un mélange de 43% de chlorure de calcium, de 41% de chlorure de sodium et de 15% de chlorure de magnésium. Le calso est ajouté à 4% dans le sable ou granulat concassé pour fabriquer les abrasifs ou lieu de 5% de sel. Ce produit comprend l'abrasif humide.

Une nouveauté importante est l'utilisation du sel humidifié. Cette technique consiste en humidifiant le sel par le moyen d'une saumure, soit une solution de chlorure de calcium à 28%. Le sel humidifié est utilisé surtout sur les routes où le débit de circulation est le plus élevé.

La EP 1 958 998 A1 divulgue un granulat pour le traitement de surfaces enneigées et/ou verglacées consistant en particules de bois comprenant 1 à 5 % (masse) d'au moins un sel soluble dans l'eau d'un métal alcalin ou alcalino-terreux, caractérisé en ce que le sel soluble est un chlorure, nitrure, sulfate ou acétate d'un métal alcalin ou alcalino-terreux. Cépendant, la quantité énorme du sel cause des inconvénients par rapport à l'environnement car les sels utilisés sont nuisibles aux plantes et les surfaces en asphalte.

Cependant, les matériaux utilisés ont des inconvénients.

Les sels de déglaçage, en particulier le chlorure de sodium sont nuisible aux plantes qui se trouvent le long des chaussées et des routes piétonnes.

Le désavantage de l'abrasif est - mis à part le contenu de chlorure de sodium - qu'après la fonte de la neige il reste sur place et les routes doivent être nettoyées afin d'éviter une pollution par une poussière fine.

C'est donc l'objet de la présente invention de fournir un nouveau granulat pour le traitement de surfaces enneigées et/ou verglacées, qui évite les inconvénients des matériaux utilisés jusqu'ici et surtout de fournir un produit écologique qui peut être recyclé et utilisé à d'autres fins et causera un impact minime pour l'environnement.

Ce problème est résolu par un granulat pour le traitement de surfaces enneigées et/ou verglacées consistant en particules de bois comprenant 0,1 à 0,5 % par poids(masse, déterminé après torrefaction) au moins d'un sel soluble dans l'eau d'un métal alcalin ou alcalino-terreux ou les sels solubles dans l'eau sont de préférence des chlorures, nitrures et sulfates et acétates des métaux alcalins ou alcalino-terreux. Les métaux les plus préférés sont le sodium, le potassium, le magnésium et le calcium.

La présence du sel en métal alcalin ou alcalino-terreux a pour effet que le granulat, en contact avec une surface enneigée ou verglacée, fait fondre cette dernière. Le granulat s'enfonce alors en partie dans le support.

Par rapport à l'art antérieur du EP 1 958 998 A1 il est surprenant, que les effets anti-neige et anti-glaçage ont été obtenus avec une concentration du sel soluble dans les particules de bois qui est nettement inférieure, c.à.d, 10 fois inférieur. Cette concentration inférieure permet d'économiser la quantité du sel et donc la quantité du sel qui a un impact négatif à l'environnement.

En chiffres absolues, dans un mode de réalisation préfére, les particules en bois contiennent 20-30mg/kg (0,20-0,30% par poids)du sel soluble dans l'eau . Dans un mode de réalisation le plus préféré, les particules en bois contiennent 30mg/kg (0,3% par poids)du sel soluble dans l'eau.

A moins de 10 mg du sel soluble dans l'eau par kg des particules en bois, il n'y a presqu'aucun effet anti-neige et anti-glaçage. A moins de 14mg/kg à 10 mg/kg (de bois sec), les particules en bois sont opérationnel, mais pour une utilisation avec une température de -5° à -8° seulement. Tandis qu'avec une quantité de 20mg à 30mg du sel soluble dans l'eau par kg du bois sec, les particules en bois sont utilisable et opérationnel jusqu'à - 40 °.

Avec plus de 50 mg du sel soluble dans l'eau par kg du bois sec, le récyclage devient plus onéreux aà cause des plus garn-des quantités de sel à récupérer.

Donc, uUne concentration plus élevée est possible mais évitée, car elle engendre des coûts supérieurs par rapport à la concentration préférée.

Ce granulat offre l'avantage que c'est un produit écologique et il reste grâce à sa masse volumique, qui est par rapport au granulat utilisé dans l'art antérieur moins grande, toujours en surface ce qui entraîne une amélioration de l'adhérence de la surface traitée et surtout une adhérence prolongée.

Le granulat selon l'invention est plus tendre que les granulats minéraux normalement utilisé ce qui évite le dégât dans les appartements lorsque les particules adhèrent aux chaussures. Il est également moins agressif pour les pattes des animaux qui marchent sur le granulat.

En plus, le granulat offre l'avantage d'une élimination naturelle, par le réseau d'égouts et traitement dans une station d'épuration ou par brossage et/ou incinération.

Le bois peut être tout bois dur qui est présent en copeaux ou granulés, par exemple le chêne, l'hêtre etc.

Les particules sont obtenues par broyage ou déchiquetage, puis double tamisage pour obtenir la dimension voulue.

Le diamètre des particules sous forme des granules s'inscrit de préférence dans une plage allant de 3 à 20 mm, de préférence entre 5 à 15 mm, le plus préfére entre 6 et 12 mm.

Dans un mode de réalisation préféré on utilise des copeaux, les copeaux ont une longueur comprise dans une plage de 4 mm à 2,5 cm et ont une épaisseur ≥ 3mm. Il est préféré d'utiliser des tamis à la fabrication des copeaux pour éviter d'avoir le moins possible d'indésirable que sont les copeaux de moins de 4 mm et d'une épaisseur de moins de 3 mm aussi tout ce qui dépasse le 2.5 cm de longueur. Les copeaux qui rentrent dans la fabrication optimale et constituent donc un mode de réalisation préféré ont d'une mesure de coté qui va de 0.5 mm a 25 mm et d'une épaisseur allant de 3 mm à 8 mm.

Les sels solubles dans l'eau sont de préférence des chlorures, nitrures et sulfates et acétates des métaux alcalins ou alcalino-terreux. Les métaux les plus préférés sont le sodium, le potassium, le magnésium et le calcium.

Il est évident qu'on peut aussi utiliser dans d'autres modes opératoires un mélange de plusieurs sels et/ou faire une composition des sels du même métal.

Parmi les sels préférés pour l'utilisation dans le procédé selon l'invention se trouvent le chlorure de magnésium, de calcium et de sodium ou des mélanges de ces sels.

De préférence, on utilise le chlorure de magnésium qui a une valeur pH très basse, donc c'est peux agressif vis-à-vis des constructions en béton, vis-à-vis de l'environnement et vis-à-vis des animaux par rapport par exemple au chlorure de sodium.

Le but de la présente invention est également résolu par un procédé de préparation d'un granulat pour le traitement de surfaces enneigées et/ou verglacées selon l'invention.

Ce procédé comprend les étapes suivantes :
a) mise à disposition un granulat consistant en particules de bois ;
b) préparation d'une saumure contenant au moins un sel soluble dans l'eau d'un métal alcalin ou alcalino-terreux dont le sel soluble dans l'eau est un chlorure, nitrure, sulfate ou acétate d'un métal alcalin ou alcalino-terreux ;
c) macération du granulat dans la saumure ;
d) Séchage du granulat ainsi obtenu ;
e) Torréfaction du granulat séché.

L'étape de macération (trempage) dure entre 1 et 5 jours, de préférence à température ambiante.

Dans d'autres modes opératoires, on peut aussi prévoir de chauffer légèrement pour obtenir une meilleure adsorption du sel dans le bois.

La concentration du sel dans la saumure est comprise dans une plage de 20,1 à 23,5% (masse), de préférence entre 20,1 et 22 % (masse). On a observé qu'il ne faut pas dépasser une valeur de 23,5% car à partir de 23,5% le procédé de dégel se compromet et diminue considerablement.

Dans un mode opératoire préféré, les particules en bois dans l'étape a) disposent d'un taux d'humidité de 20 à 50% (masse). De préférence entre 25 et 35 % et dans un mode opératoire le plus préfére 28 à 32 %. En dehors de cette plage préférée, on n'obtient pas la valeur préféré de 0,1 à 0,5% (masse) pour le contenu du sel soluble dans l'eau dans les particules en bois.

L'humidité du bois est définie par la norme EN 13183 comme étant le rapport de la masse d'eau contenue dans le bois sur la masse de bois sec. La détermination du taux d'humidité est décrit dans EN 13183 ou dans Vernay et al. https://www.atibt.org/files/upload/technical-publications/publications-bois-tropical/5-HUMIDITE-DU-BOIS.pdf

L'étape de séchage se fait entre 1 heure à 5 heures, de préférence entre 3 et 5 heures, à l'air libre ou par apport calorique à une température comprise dans une plage de 100°C à 200°C, de préférence de 130°C à 140°C. Il faut noter que la durée de séchage dépend aussi de la nature de bois parce que certaines sortes de bois, comme par exemple le chêne, peuvent subsister à des températures supérieures que par exemple l'hêtre etc.

La torréfaction du produit séché se fait avec du matériel approprié (four, plaque chauffante, torréfacteur) entre 180°C et 250% jusqu'à l'obtention d'une surface légèrement brunie et dure.

Le produit obtenu selon le procédé selon l'invention, c'est-à-dire le produit selon l'invention, est destiné à améliorer l'adhérence des surfaces enneigées et/ou verglacées dans le cadre de l'entretien hivernal des routes et des trottoirs. On peut l'appliquer à toute surface circulée, par exemple des routes, des trottoirs, des zones piétonnes.

En général, le produit est dosé à 20 à 100 g/m² et est étendu à la main ou à la machine.

Comme déjà décrit ci-dessus, après la fonte de neige le produit selon la présente invention peut être éliminé naturellement par le réseau d'égouts ou par brossage et incinération.

## Revendications

1. Granulat pour le traitement de surfaces enneigées et/ou verglacées consistant en particules de bois comprenant 0,1 à 0,5% par poids (masse) d'au moins un sel soluble dans l'eau d'un métal alcalin ou alcalino-terreux, **caractérisé en ce que** le sel soluble est un chlorure, nitrure, sulfate ou acétate d'un métal alcalin ou alcalino-terreux

2. Granulat selon la revendication 1, **caractérisé en ce que** les particules en bois sont des copeaux.

3. Granulat selon la revendication 2, **caractérisé en ce que** les copeaux ont une longueur comprise dans une plage de 4 mm à 2,5 cm et ont une épaisseur ≥ 3mm.

4. Granulat selon l'une des revendications 1 à 3, **caractérisé en ce que** les métaux sont sélectionnés du groupe consistant en Na, K, Mg, Ca et leurs mélanges.

5. Granulat selon l'une des revendications 1 à 4, **caractérisé en ce que** plusieurs sels sont présents.

6. Procédé de préparation d'un granulat pour le traitement de surfaces enneigées et/ou verglacées selon l'une des revendications précédentes comprenant les étapes suivantes :
a) Mise à disposition d'un granulat consistant en particules de bois ;
b) Préparation d'une saumure contenant au moins un sel soluble dans l'eau d'un métal alcalin ou alcalino-terreux dont le sel soluble dans l'eau est un chlorure, nitrure, sulfate ou acétate d'un métal alcalin ou alcalino-terreux ;
c) Trempage du granulat dans la saumure ;
d) Séchage du granulat ;
e) Torréfaction du granulat séché.

7. Procédé selon la revendication 6, **caractérisé en ce que** le sel est sélectionné du groupe consistant en MgCl₂, CaCl₂, NaCl et leurs mélanges.

8. Procédé selon la revendication 6 ou 7, **caractérisé en ce que** la concentration du sel dans la saumure est comprise dans une plage de 20,1 à 23,5% par poids, de préférence entre 20,1 et 22 % par poids.

9. Procédé selon l'une des revendications 6 à 8, caractérisé en ce les particules en bois dans l'étape a) disposent d'un taux d'humidité de 20 à 50%.

10. Procédé selon l'une des revendications 6 à 9, **caractérisé en ce que** l'étape de trempage dure entre 24h et 120 heures.

11. Procédé selon l'une des revendications 6 à 10, **caractérisé en ce que** le trempage est exécuté à température ambiante.

12. Procédé selon l'une des revendications 6 à 11, **caractérisé en ce que** le séchage se fait à l'air libre ou par apport calorique.

13. Procédé selon la revendication 10, **caractérisé en ce que** l'étape de torréfaction est exécuté entre 180°C et 250°.

## Patentansprüche

1. Granulat zur Behandlung von schneebedeckten und/oder vereisten Oberflächen, bestehend aus Holzpartikeln, die 0,1 bis 0,5 Gew.-% (Masse) mindestens eines wasserlöslichen Salzes eines Alkali- oder Erdalkalimetalls enthalten, **dadurch gekennzeichnet, dass** das lösliche Salz ein Chlorid, Nitrid, Sulfat oder Acetat eines Alkali- oder Erdalkalimetalls ist

2. Granulat nach Anspruch 1, **dadurch gekennzeichnet, dass** die Holzpartikel Späne sind.

3. Granulat nach Anspruch 2, **dadurch gekennzeichnet, dass** die Späne eine Länge im Bereich von 4 mm bis 2,5 cm und eine Dicke von ≥ 3 mm aufweisen.

4. Granulat nach einem der Ansprüche 1 bis 3, **dadurch gekennzeichnet, dass** die Metalle aus der Gruppe ausgewählt sind, die aus Na, K, Mg, Ca und deren Mischungen besteht.

5. Granulat nach einem der Ansprüche 1 bis 4, **dadurch gekennzeichnet, dass** mehrere Salze vorhanden sind.

6. Verfahren zur Herstellung eines Granulats zur Behandlung von schneebedeckten und/oder vereisten Oberflächen gemäß einem der vorstehenden Ansprüche, das die folgenden Schritte umfasst:
a) Bereitstellen eines Granulats, das aus Holzpartikeln besteht;
b) Herstellung einer Sole, die mindestens ein wasserlösliches Salz eines Alkali- oder Erdalkalimetalls enthält, dessen wasserlösliches Salz ein Chlorid, Nitrid, Sulfat oder Acetat eines Alkali- oder Erdalkalimetalls ist ;
c) Einweichen des Granulats in der Salzlake;
d) Trocknen des Granulats;
e) Rösten des getrockneten Granulats.

7. Verfahren nach Anspruch 6, **dadurch gekennzeichnet, dass** das Salz aus der Gruppe ausgewählt ist, die aus MgCl₂, CaCl₂, NaCl und deren Mischungen besteht.

8. Verfahren nach Anspruch 6 oder 7, **dadurch gekennzeichnet, dass** die Salzkonzentration in der Salzlake in einem Bereich von 20,1 bis 23,5 Gew.-%, vorzugsweise zwischen 20,1 und 22 Gew.-%, liegt.

9. Verfahren nach einem der Ansprüche 6 bis 8, **dadurch gekennzeichnet, dass** die Holzpartikel in Schritt a) einen Feuchtigkeitsgehalt von 20 bis 50 % aufweisen.

10. Verfahren nach einem der Ansprüche 6 bis 9, **dadurch gekennzeichnet, dass** der Einweichschritt zwischen 24 und 120 Stunden dauert.

11. Verfahren nach einem der Ansprüche 6 bis 10, **dadurch gekennzeichnet, dass** das Einweichen bei Raumtemperatur durchgeführt wird.

12. Verfahren nach einem der Ansprüche 6 bis 11, **dadurch gekennzeichnet, dass** die Trocknung an der Luft oder durch Wärmezufuhr erfolgt.

13. Verfahren nach Anspruch 10, **dadurch gekennzeichnet, dass** der Röstschritt bei einer Temperatur zwischen 180 °C und 250 °C durchgeführt wird.

## Claims

1. Granulate for treating snow-covered and/or icy surfaces consisting of wood particles comprising 0.1 to 0.5% by weight (mass) of at least one water-soluble salt of an alkali metal or alkaline earth metal, **characterised in that** the soluble salt is a chloride, nitride, sulphate or acetate of an alkali metal or alkaline earth metal

2. Granulate according to claim 1, **characterised in that** the wood particles are chips.

3. Granulate according to claim 2, **characterised in that** the chips have a length in the range of 4 mm to 2.5 cm and a thickness ≥ 3 mm.

4. Granulate according to one of claims 1 to 3, **characterised in that** the metals are selected from the group consisting of Na, K, Mg, Ca and mixtures thereof.

5. Granulate according to one of claims 1 to 4, **characterised in that** several salts are present.

6. Method for preparing a granulate for treating snow-covered and/or icy surfaces according to one of the preceding claims, comprising the following steps:
a) Providing a granulate consisting of wood particles;
b) Preparing a brine containing at least one water-soluble salt of an alkali metal or alkaline earth metal, the water-soluble salt being a chloride, nitride, sulphate or acetate e of an alkali metal or alkaline earth metal;
c) Soaking the granulate in the brine;
d) Drying the granulate;
e) Roasting the dried granulate.

7. Process according to claim 6, **characterised in that** the salt is selected from the group consisting of MgCl₂, CaCl₂, NaCl and mixtures thereof.

8. Process according to claim 6 or 7, **characterised in that** the concentration of salt in the brine is in the range of 20.1 to 23.5% by weight, preferably between 20.1 and 22% by weight.

9. Process according to one of claims 6 to 8, **characterised in that** the wood particles in step a) have a moisture content of 20 to 50%.

10. Process according to one of claims 6 to 9, **characterised in that** the soaking step lasts between 24 and 120 hours.

11. Process according to one of claims 6 to 10, **characterised in that** the soaking is carried out at room temperature.

12. Process according to one of claims 6 to 11, **characterised in that** drying is carried out in the open air or by heat supply.

13. Process according to claim 10, **characterised in that** the roasting step is carried out at between 180°C and 250°C.
